## Europäisches Patentamt

## European Patent Office

## Office européen des brevets

(11) Veröffentlichungsnummer: **0 423 417 A1**

## (12) EUROPÄISCHE PATENTANMELDUNG

(21) Anmeldenummer: 90107062.3

(22) Anmeldetag: **12.04.90**

(51) Int. Cl.5: **B01D 53/34**, C10L 1/10

(30) Priorität: 15.09.89 DE 3930851

(43) Veröffentlichungstag der Anmeldung:
**24.04.91 Patentblatt 91/17**

(84) Benannte Vertragsstaaten:
**AT BE CH DE DK ES FR GB GR IT LI LU NL SE**

(71) Anmelder: SAT Chemie G.m.b.H.
Oststrasse 92
W-2000 Norderstedt(DE)

(72) Erfinder: **Reynolds, Thomas, Dr.-Ing.**
**Am Flidderberg 6**
**W-2111 Handeloh 2(DE)**
Erfinder: **Meurer, Jan Dirk**
**Hasengrund 9**
**W-2107 Rosengarten(DE)**

(74) Vertreter: **Lindner, Wolfgang, Dr.**
**Alexander-von-Humboldt-Strasse Postfach**
**20 10 45**
**W-4650 Gelsenkirchen(DE)**

(54) Verfahren zur selektiven nichtkatalytischen Reduktion der Emission von Schadstoffen aus ölbefeuerten Kesselanlagen.

(57) Bei diesem Verfahren zur selektiven nicht-katalytischen Reduktion der Emission von Schadstoffen aus ölbefeuerten Kesselanlagen werden den Verbrennungsvorgang beeinflussende chemische Verbindungen zum flüssigen Brennstoff oder zur Verbrennungsluft, hierunter Salze organischer Säuren wie Naphthenate, Octoate, Tallate, Salze von Sulfonsäuren, gesättigten oder ungesättigten Fettsäuren, Ölsäuren, Tallöl mit Metallen aus der Gruppe K, Ba, Mg, Ca, Ce, Mn, Fe; Seltenerdmetallen; Organometallverbindungen wie Carbonylverbindungen, gemischte Cyclopentadienylcarbonylverbindungen oder Aromatenkomplexe der Übergangsmetalle Fe oder Mn in mit dem flüssigen Brennstoff mischbaren Lösungen zudosiert.-Zwecks Minimierung der $NO_x$-Werte im Abgas und der Staubbelastung bei sparsamem Chemikalienverbrauch wird ein Reduktionsmittel in den Feuerungsraum (Brennerraum) über ein Kesseldosiersystem unter Verwendung eines flüssigen oder auch gasförmigen Trägermittelstroms als wässrige Lösung von Harnstoff oder auch Harnstoffvorläufern wie Ammoniak oder Ammoniumcarbonat, die auch weitere Bestandteile wie Alkanole, Alkancarbonsäuren, Alkanale oder Alkanone enthalten können, zudosiert.

Figur 1

EP 0 423 417 A1

## VERFAHREN ZUR SELEKTIVEN NICHT-KATALYTISCHEN REDUKTION DER EMISSION VON SCHADSTOF-FEN AUS ÖLBEFEUERTEN KESSELANLAGEN

Die Erfindung betrifft ein Verfahren zur selektiven nicht-katalytischen Reduktion der Emission von Schadstoffen aus ölbefeuerten Kesselanlagen unter Zudosierung den Verbrennungsvorgang beeinflussender chemischer Verbindungen zum flüssigen Brennstoff oder zur Verbrennungsluft, hierunter Salze organischer Säuren wie Naphthenate, Octoate, Tallate, Salze von Sulfonsäuren, gesättigten oder ungesättigten Fettsäuren, Ölsäuren, Tallöl mit Metallen aus der Gruppe K, Ba, Mg, Ca, Ce, Mn, Fe, Seltenerdmetallen; Organometallverbindungen wie Carbonylverbindungen, gemischte Cyclopentadienylcarbonylverbindungen oder Aromatenkomplexe der Übergangsmetalle Fe oder Mn in mit dem flüssigen Brennstoff mischbaren Lösungen.

Zum Stand der Technik wird verwiesen auf einen Aufsatz von V. Hoenig und G. Baumbach, erschienen in dem Sammelband der VGB-Konferenz Kraftwerk und Umwelt 1989, Seiten 213 - 217, "Schadstoffminderung bei Schwerölfeuerungen durch Additive: Ruß, $SO_3$, $NO_x$, dessen nachfolgend zitierte Einleitung das technische Umfeld und das der Erfindung zugrundliegende Problem umreißt.

Durch die 1983 in der 13. BImSchV (Großfeuerungsanlagenverordnung, GFAVO) und 1986 in der TA Luft eingeführten Schadstoffemissions-Grenzwerte für Feuerungsanlagen stehen auch die Betreiber von Schwerölfeuerungen vor dem Problem, ihre Anlagen umweltfreundlicher betreiben zu müssen. Schweres Heizöl wird heute vorwiegend in der Industrie (Dampf- bzw. Heißwassererzeuger, Prozeßwärme), und in geringem Maße noch in Spitzenlastkraftwerken verbrannt. Die meisten Schwerölfeuerungen liegen in dem der TA Luft unterliegenden Leistungsbereich 50 $MW_{th}$. Im Bereich der GFAVO sind in der Bundesrepublik Deutschland nur noch wenige Ölkraftwerke in Betrieb.

Obwohl der Gesamtverbrauch von Heizöl S seit Mitte der 70er Jahre um mehr als die Hälfte zurückgegangen ist, ist sein Einsatz für manche Betreiber nach wie vor interessant. Vor allem wegen der niedrigen Ölpreise hat sich der Schwerölverbrauch in den Jahren 1986/87 stabilisiert.

(Schweres Heizöl fällt bei der Rohölverarbeitung an und wird zu einem Entsorgungsproblem, wenn in einer Vielzahl von sogenannten TA Luft Anlagen kein Heizöl S mehr eingesetzt werden kann.)

Neben den Stickoxidemissionen stellen die Emissionen von $SO_2$, Staub und von sauren Rauchgasbestandteilen ($SO_3$, an Flugstaub bzw. Flugkoks absorbierte Schwefelsäure) ein Problem dar. Die $SO_2$-Grenzwerte der TA Luft lassen sich durch die Verwendung eines schwefelarmen Öls (max. 1 %-Ware) einhalten. Zur Verminderung der $NO_x$-Emission kommen bei diesen Anlagen heute vorwiegend feuerungstechnische Primärmaßnahmen bzw. SNCR-Verfahren (selektive nichtkatalytische Reduktion) zum Einsatz. Eine Möglichkeit, die Emissionen von Ruß und sauren Rauchgasbestandteilen zu reduzieren, stellt die Aufbereitung des Öls mit Additiven dar. Hierzu wurden am Institut für Verfahrenstechnik und Dampfkesselwesen der Universität Stuttgart (IVD) spezielle Untersuchungen durchgeführt.

In dem U.S. Patent 4 208 386 für Arand et al. ist offenbart, Verbrennungsabgase mit Restsauerstoffgehalt und einem Gehalt an $NO_x$ mit Harnstoff, entweder als Feststoff oder in einem Lösungsmittel, beispielsweise ein Alkanol mit 1 - 3 Kohlenstoffatomen, Wasser, ein Keton mit 3 - 4 Kohlenstoffatomen, gelöst, bei erhöhter Temperatur in Kontakt zu bringen. Der Harnstoff soll in einer Menge angewandt werden, die wirksam ist, um den $NO_x$- Gehalt in dem Abgas wesentlich zu reduzieren. Die anzuwendenden Temperaturen liegen bei mindestens 1300 °F, wenn ein zusätzliches Reduktionsmittel anwesend ist und bei mindestens 1600 °F in Abwesenheit eines weiteren Reduktionsmittels.

In dem weiteren U.S. Patent 4 325 924 für Arand et al. wird offenbart, $NO_x$ enthaltende Verbrennungsabgase, die aber einen Überschuß an Brennstoff in Bezug auf den stöchiometrischen Sauerstoffbedarf aufweisen, mit Harnstoff entweder als Feststoff oder in Lösung bei Temperaturen oberhalb 1900 °F und in Mengen, die zu einer wesentlichen Verminderung des Gehaltes an $NO_x$ ausreichend sind, zu kontaktieren. Hier weist das Äquivalenzverhältnis von Brennstoff zu Sauerstoff einen Wert von größer als 1 : 1, insbesondere größer als 1,05 : 1 und im allgemeinen weniger als 1,5 : 1 auf. Die in einer Tabelle angegebenen erhaltenen Werte weisen in Abhängigkeit von der angewandten Harnstoffkonzentration signifikante Verminderungen der $NO_x$-Konzentration aus, allerdings werden je nach den angewandten Temperatur- und Konzentrationsverhältnissen auch wechselnde Mengen an Ammoniak in dem reduzierten Abgas beobachtet.

In dem U.S. Patent 3 900 554 ist der Einsatz von Ammoniak zur Reduzierung der Konzentration von Stickoxid (NO) in Verbrennungsabgasen offenbart. Die dem Patent zugrundeliegende Aufgabe ist, NO in Gegenwart von Restsauerstoff im Rauchgas selektiv zu reduzieren. Die Kosten eines Reduktionsmittels in einer solchen selektiven nicht-katalytischen Reduktion von NO würden den kleinen Mengen an zu reduzierendem NO entsprechen und nicht den viel größeren Mengen, die zum Reduzieren von NO sowie dem Restsauerstoff benötigt werden würden.

Die Patentanmeldung WO 87/02025 betrifft ein Verfahren zum Reduzieren von $NO_x$ in einem Abstrom der Verbrennung kohlenstoffhaltiger Brennstoffe unter Sauerstoffüberschuß, wobei die Entstehung C-haltiger Emissionen minimiert ist. Es wird eine Dispersion einer verdünnten wässrigen Harnstofflösung in den Abstrom bei einer Temperatur von oberhalb 2000 °F, vorzugsweise oberhalb 2100 °F, injiziert. Die Konzentration der Harnstofflösung und die Tröpfchengröße in der Dispersion liegen vorzugsweise bei mindestens 80 Gew.-% Lösungsmittelgehalt und einer Tröpfchengröße im Bereich von 150 - 10 000 μm. In den besagten Abstrom wird eine wässrige Lösung von Harnstoff in Gegenwart eines "Oxygenates", beispielsweise Ethylenglykol, als eine Dispersion von Tröpfchen bei einer Temperatur oberhalb 1600 °F injiziert.

Der Erfindung liegt die Aufgabe zugrunde, den Gehalt an festen Teilverbrennungsprodukten (Koks, Ruß) und eine Minimierung der $NO_x$-Werte im Abgas bei sparsamem Chemikalieneinsatz zu realisieren.

Die Erfindung ist dadurch gekennzeichnet, daß ein Reduktionsmittel in den Feuerungsraum (Brennerraum) über ein Kesseldosiersystem unter verwendung eines flüssigen oder auch gasförmigen Trägermittelstroms als wässrige Lösung von Harnstoff oder auch Harnstoffvorläufern wie Ammoniak oder Ammoniumcarbonat, die auch weitere Bestandteile wie Alkanole, Alkancarbonsäuren, Alkanale oder Alkanone enthalten können, zudosiert wird.

Durch die Kombination dieser Maßnahmen in Verbindung mit dem eingangs bezeichneten Verfahren gelingt es in Bezug auf die Lambda-Zahl der Verbrennungsabgase in einen günstigeren Bereich bezüglich der $NO_x$-Bildung zu kommen und die Aufgabe der Minimierung der $NO_x$-Werte im Abgas bei sparsamem Chemikalieneinsatz zu realisieren.

Die Lambda-Zahl kennzeichnet das Luft-Brennstoffgemisch und ist definiert durch das Verhältnis von zugeführter Luftmenge zu theoretischem Luftbedarf.

Da es sich bei dem der TA Luft unterliegenden Leistungsbereich von etwa bis zu 50 MW thermischer Leistung um den bevorzugten Einsatzbereich von Schwerölfeuerungen handelt, bezieht sich eine bevorzugte Anwendung der Erfindung auf den Einsatz von schwerem Heizöl (Heizöl S).

Die den Verbrennungsvorgang beeinflussenden chemischen Verbindungen werden vorzugsweise als mit dem flüssigen Brennstoff ohne Mischungslücke mischbare Lösungen über ein last- oder auch emissionsgesteuertes Brennerdosiersystem zugeführt. Ein derartiges Verfahren wird dadurch optimiert, daß einerseits auf den $NO_x$-Gehalt als Steuergröße abgestellt wird, andererseits berücksichtigt wird, daß Feuerungsanlagen der genannten Art auf unterschiedlichen Laststufen betrieben werden.

Als Führungsgröße wird die pro Zeiteinheit benötigte Brennstoffmenge herangezogen, die ohnehin beim Betrieb derartiger industrieller Anlagen zur Kontrolle des Verbrennungsvorganges und der Last ermittelt wird.

Diese Größe sowie der im Abgasstrom festgestelle $NO_x$-Gehalt werden beispielsweise einem Rechner oder einem Regler zugeführt, der ausgangsseitig auf (eine) im Feuerungsraum in Bezug auf die Brennerpositionen verfahrbare Dosierlanze(n) für das Reduktionsmittel einwirkt und zwar in der Weise, daß der niedrigste $NO_x$-Gehalt im Abgas als Betriebsgröße angesteuert wird.

Demgemäß besteht eine bevorzugte Ausführungsform der Erfindung darin, die Zugabe des Reduktionsmittels in den Feuerungsraum mittels eines lastabhängigen Kesseldosiersystems in Bezug auf die Position im Feuerungsraum sowie die Konzentration des Reduktionsmittels zu steuern, wobei das Kesseldosiersystem durch in Bezug auf die Brennerpositionen verfahrbare Dosierlanze(n) für das Reduktionsmittel gesteuert wird.

Das Reduktionsmittel wird so injiziert, daß in Abhängigkeit von der Auslastung der Feuerungsanlage der $NO_x$-Gehalt der Abgase bei vorgegebenem Ruß- bzw. Koksgehalt ( = Staubgehalt) minimiert wird.

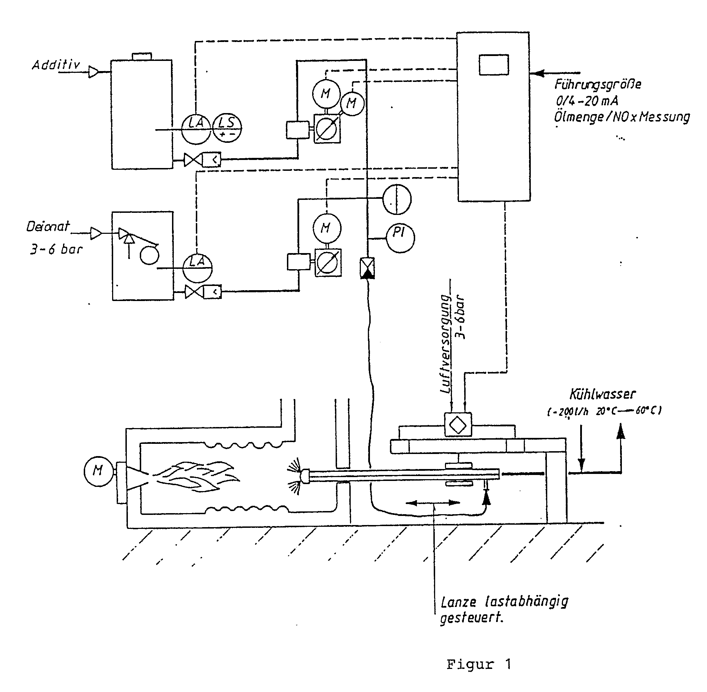

Das Funktionsschema eines solchen Systems zur Dosierung des Reduktionsmittels in den Feuerungsraum (Brennerraum) über das Kesseldosiersystem in Form einer wässrigen Lösung von Harnstoff wird anhand der Figur 1 der Zeichnung wie folgt weiter erläutert. Gleichzeitig werden nachfolgend Ergebnisse über Emissionsmessungen an einem Dampferzeuger (einem Zweiflammrohr- Rauchrohr Dreizug-Kessel), der neben Erdgas auch mit schwerem Heizöl befeuert werden kann, mitgeteilt.

Die wässrige Harnstofflösung mit einem Gehalt von 40 Gew.-% Harnstoff wird lastabhängig gesteuert über zwei verfahrbare Lanzen von hinten in die Flammenrohre des Kessels eingesprüht. Die benötigten Wassermengen werden manuell an zwei Dosierpumpen (eine Pumpe je Flammrohr) eingestellt. Hierbei erfolgt eine Verdünnung der eingesetzten wässrigen Harnstofflösung auf etwa 20 bis 0,5, vorzugsweise 10 bis 2 Gew.-%. Die wässrige Harnstofflösung wird durch zwei Dosierpumpen (eine Pumpe je Flammrohr) dosiert, wobei die Mengen automatisch $NO_x$- und lastabhängig verändert werden.

Die Daten des Dampferzeugers und der Ölfeuerungsanlagen sind die folgenden:

| 1. Daten des Dampferzeugers | |
|---|---|
| Bauart:<br>Hersteller:<br>Zul. Kesselleistung:<br>zul. Betriebsüberdruck:<br>zul. Heißdampftemperatur: | Zweiflammrohr-Rauchrohr-Dreizugkessel mit Überhitzer<br>Standardkessel Duisburg<br>20 t/h<br>20 bar<br>285 °C |
| 2. Daten des Ölfeuerungsanlage | |
| Bauart:<br>Hersteller:<br>Typ:<br>Öldurchsatz:<br>Baumusternummer: | Drehzerstäuber<br>RAY, Fellbach/Stuttgart<br>2 x BGEC 700<br>120 - 700 kg/h<br>18304/82K |

Die Meßstelle befand sich im Abgaskanal nach Kesselende vor dem Rauchgasdichtemeßgerät. Die Meßstelle erfüllt in Bezug auf die störungsfreien Ein- und Auslaufstrecken die Anforderungen der VDI Richtlinie 2066, Blatt 1.

Bei jedem Betriebszustand wurden 1 bis 2 Messungen von 30 Minuten Dauer durchgeführt.

Es wurden gemessen:

Stickstoffoxide: Beckmann $NO/NO_x$-Gasanalysator, Meßprinzip Chemilumineszenz-Methode

Kohlenmonoxidgehalt: Maihak-Infrarot-Gasanalysator

Staubgehalt: Hülsenstaubmeßgeräte nach der VDI-Richtlinie 2066, Blatt 2 (Staubmessung in strömenden (Gasen). Die Abgasgeschwindigkeit wurde mit Hilfe eines Prandtl'schen Staurohres und eines Mikromanometers ermittelt.

Rußzahl: Bacharach-Rußtester und Filterpapier

$O_2$-Gehalt: Servomex-$O_2$-Analysator, Meßprinzip Paramagnetismus,

Rauchgastemperatur: FeKo-Thermoelement, Vergleichsmeßstelle 0 °C und Digital-Millivoltmeter.

Die Brennstoffdurchsätze wurden an den vorhandenen Ölzählern bestimmt.

Ferner wurde die Ammoniakkonzentration im Abgas mit einer Nachweisgrenze von 0,5 $mg/m^3$ bestimmt.

Der eingesetzte Brennstoff wies die folgenden Spezifikationen auf:

| Additiv 30 Gew.-ppm Ca + 7,5 Gew.-ppm Fe in Form öllöslicher Verbindungen | |
|---|---|
| Asche DIN EN 7 | 0,07 Gew.-% |
| Asphaltene DIN 51 595 | 0,68 Gew-% |
| Stickstoff ASTM | 0,31 Gew.-% |

Die wesentlichen Ergebnisse sind in den folgenden Tabellen 3 und 4 zusammengefaßt. Ferner sind die erhaltenen Meßwerte für den $NH_3$-Gehalt angegeben. Die angegebenen Werte beziehen sich auf trockenes Abgas, Normzustand und 3 Vol.-% $O_2$.

4

Tabelle 1:

| Lastbereich | Grundlast | | Halblast | | | Vollast | | |
|---|---|---|---|---|---|---|---|---|
| Heizölverbrauch bei Nennlast | | | | | | 1395 | | kg/h |
| ermittelter Heizölverbrauch | 675 | | 960 | | | 1330 | | kg/h |
| Feuerungswärmeleistung bezogen auf Nennleistung | 48,4 | | 68,8 | | | 95,3 | | % |
| Dampfdruck Kessel (Überdruck) | 15,8–16,3 | | 14,5–15,0 | | | 14,0–14,8 | | bar |
| Heißdampftemperatur | 235 | | 240 – 245 | | | 245– 250 | | °C |
| Speisewassertemp. vor Eco | 105 | | 105 | | | 105 | | °C |
| $O_2$-Gehalt | 3,1 | 3,6 | 3,1 | 3,1 | 3,1 | 2,8 | 2,8 | % |
| Abgastemperatur | 166 | 165 | 175 | 175 | 176 | 189 | 189 | °C |
| Staubgehalt | – | – | – | – | – | 53,4 | 41,7 | $mg/m^3n$ |
| desgl. bez. auf 3% $O_2$ | – | – | – | – | – | 52,8 | 41,2 | $mg/m^3n$ |
| Rußzahl | – | – | – | – | – | 1–2 | 1–2 | |
| Ölderivate | – | – | – | – | – | keine | keine | |
| CO-Gehalt | – | – | – | – | – | 10 | 10 | $mg/m^3n$ |
| desgl. bez. auf 3% $O_2$ | – | – | – | – | – | 10 | 10 | $mg/m^3n$ |
| $NO_x$ berechnet als $NO_2$ | 396 | 375 | 400 | 404 | 402 | 455 | 451 | $mg/m^3n$ |
| desgl. bez. auf 3% $O_2$ | 371 | 388 | 402 | 406 | 404 | 450 | 446 | $mg/m^3n$ |

Tabelle 1 (Fortsetzung):

| Lastbereich | Grundlast | | Halblast | | | Vollast | | |
|---|---|---|---|---|---|---|---|---|
| Verbrauch-Reduktionsmittel | 2,9 | 2,9 | 11,75 | 11,75 | 11,75 | 25,9 | 25,9 | l/h |
| NH3-Gehalt | 5,4 | 5,4 | 14,3 | 18,4 | 15,4 | 21,0 | 16,2 | $mg/m^3n$ |
| desgl. bez. auf 3% $O_2$ | 5,4 | 5,6 | 14,4 | 18,5 | 15,5 | 20,8 | 16,0 | $mg/m^3n$ |

Tabelle 2:

| Lastbereich | Grundlast | Halblast | Vollast | | |
|---|---|---|---|---|---|
| Heizölverbrauch bei Nennlast | | | 1380 | | kg/h |
| ermittelter Heizölverbrauch | 666 | 953 | 1316 | | kg/h |
| Feuerungswärmeleistung bezogen auf Nennleistung | 48,3 | 69,1 | 95,4 | | % |
| Dampfdruck Kessel (Überdruck) | 13,5 - 15,0 | 15,7 | 14,7 - 15,5 | | bar |
| Heißdampftemp. | 230 - 233 | 245 - 250 | 247 - 250 | | °C |
| Speisewassertemp. vor Eco | 105 | 105 | 105 | | °C |
| $O_2$ Gehalt | 3,6 | 3,0 | 3,1 | 2,8 | % |
| Abgastemperatur | 166 | 178 | 192 | 192 | °C |
| Staubgehalt | - | - | 58,9 | 53,6 | $mg/m^3n$ |
| desgl. bez. auf 3% $O_2$ | - | - | 59,2 | 53,0 | $mg/m^3n$ |
| Rußzahl | - | - | 2 | 2 | |
| Ölderivate | - | - | keine | keine | |
| CO-Gehalt | - | - | <10 | <10 | $mg/m^3n$ |
| desgl. bez. auf 3% $O_2$ | - | - | <10 | <10 | $mg/m^3n$ |
| $NO_x$ berechnet als $NO_2$ | 519 | 619 | 674 | 683 | $mg/m^3n$ |
| desgl. bez. auf 3% $O_2$ | 537 | 619 | 678 | 675 | $mg/m^3n$ |

In der Tabelle 1 sind die mit wässriger Harnstofflösung erzielten Betriebswerte angegeben. In der Tabelle 2 sind als Vergleichsversuch die Betriebswerte ohne den Einsatz von wässriger Harnstofflösung als Reduktionsmittel angegeben.

Tabelle 3:

| Emissionen | | Meßwerte | | |
|---|---|---|---|---|
| | | Grundlast | Halblast | Vollast |
| Staubgehalt | $mg/m^3n$ | - | - | 41,2-52,8 |
| Rußzahl | | - | - | 1 - 2 |
| Ölderivate | | - | - | keine |
| Kohlenmonoxidgehalt | $mg/m^3n$ | - | - | 10 |
| Stickstoffdioxidgehalt | $mg/m^3n$ | 371 - 388 | 402 - 406 | 446 - 450 |
| Ammoniakgehalt | $mg/m^3n$ | 5,4 - 5,6 | 14,4-18,5 | 16,0-20,8 |

Tabelle 4:

| Emissionen | | Meßwerte | | |
|---|---|---|---|---|
| | | Grundlast | Halblast | Vollast |
| Staubgehalt | $mg/m^3n$ | - | - | 53,0-59,2 |
| Rußzahl | | - | - | 2 |
| Ölderivate | | - | - | keine |
| Kohlenmonoxidgehalt | | - | - | <10 |
| Stickstoffdioxidgehalt | $mg/m^3n$ | 537 | 619 | 675-678 |

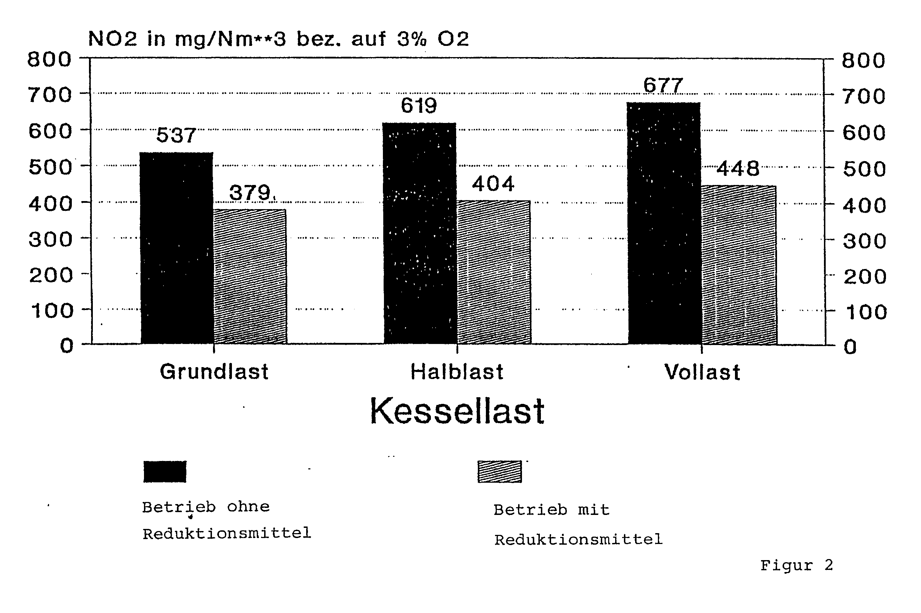

Wie aus den Tabellen 3 und 4 sowie der Figur 2 der Zeichnung, in der die erhaltenen Meßwerte graphisch dargestellt sind, ersichtlich ist, wurden beim Einsatz von wässrigen Harnstofflösungen als Reduktionsmittel in Verbindung mit den im dem Brennstoff als Additive zugesetzten öllöslichen Verbindungen Calciumsulfonat und Eisen(II)-tallat die Stickstoffoxidgehalte im Abgas um etwa ein Drittel gesenkt.

In allen Lastzuständen wurde der in der TA Luft vom Februar 1986 angegebene Grenzwert von 450 $mg/m_n^3$ für den Stickstoffdioxidgehalt im Abgas eingehalten.

Im Bezug auf den Staubgehalt werden bei vergleichbarer Rußzahl und vergleichbarem Kohlenmonoxidgehalt Staubmeßwerte von 41,7 bis 58,9 $mg/m_n^3$ eingehalten.

Der rechnerische Wert der Oxidasche ergibt einen Wert von ca. 59 $mg/m^3$, d.h. der Staubgehalt des Abgases war durch den Einsatz des primärseitigen Additives nahezu kohlenstoffrei.

Durch das erfindungsgemäße Verfahren gelingt es, in Bezug auf die Lambda-Zahl der Verbrennungsabgase in einen günstigen Bereich bezüglich der $NO_x$-Bildung zu kommen und in Kombination mit dem Kesseldosiersystem zur $NO_x$-Reduzierung auch eine Minimierung der $NO_x$-Werte im Abgas bei wirksamer Reduzierung des Gehaltes an festen Teilverbrennungsprodukten (Koks, Ruß) und sparsamem Chemikalien-einsatz zu realisieren.

## Ansprüche

1. Verfahren zur selektiven nicht-katalytischen Reduktion der Emission von Schadstoffen aus ölbefeuerten Kesselanlagen unter Zudosierung den Verbrennungsvorgang beeinflussender chemischer Verbindungen zum flüssigen Brennstoff oder zur Verbrennungsluft, hierunter Salze organischer Säuren wie Naphtenate, Octoate, Tallate, Salze von Sulfonsäuren, gesättigten oder ungesättigten Fettsäuren, Ölsäuren, Tallöl mit Metallen aus der Gruppe K, Ba, Mg, Ca, Ce, Mn, Fe; Seltenerdmetallen; Organometallverbindungen wie Carbonylverbindungen, gemischte Cyclopentadienycarbonylverbindungen oder Aromatenkomplexe der Übergangsmetalle Fe oder Mn in dem mit dem flüssigen Brennstoff mischbaren Lösungen, dadurch gekennzeichnet, daß ein Reduktionsmittel in den Feuerungsraum (Brennerraum) über ein Kesseldosiersystem unter Verwendung eines flüssigen oder auch gasförmigen Trägermittelstroms als wässrige Lösung von Harnstoff oder auch Harnstoffvorläufern wie Ammoniak oder Ammoniumcarbonat, die auch weitere Bestandteile wie Alkanole, Alkancarbonsäuren, Alkanale oder Alkanone enthalten können, zudosiert wird.

2. Verfahren nach Anspruch 1, dadurch gekennzeichnet, daß schweres Heizöl als Brennstoff eingesetzt wird.

3. Verfahren nach Anspruch 1, daß die den Verbrennungsvorgang beeinflussenden chemischen Verbindungen als mit dem flüssigen Brennstoff ohne Mischungslücke mischbare Lösungen über ein last oder auch emissionsgesteuertes Brennerdosiersystem zugeführt werden.

4. Verfahren nach Anspruch 1, dadurch gekennzeichnet, daß als Reduktionsmittel eine wässrige Harnstofflösung zudosiert wird, die in dem Kesseldosiersystem auf 20 bis 0,5, vorzugsweise 10 bis 2 Gew.-% Harnstoff verdünnt wird.

5. Verfahren nach Anspruch 1, dadurch gekennzeichnet, daß die Zugabe des Reduktionsmittels in den Feuerungsraum mittels eines lastabhängigen Kesseldosiersystems in Bezug auf die Position im Feuerungsraum sowie die Konzentration des Reduktionsmittels gesteuert wird.

6. Verfahren nach Anspruch 5, dadurch gekennzeichnet, daß das Kesseldosiersystem mittels im Feuerungsraum in Bezug auf die Bren- nerpositionen verfahrbarer Dosierlanzen für das Reduktionsmittel gesteuert wird.

7. Verfahren nach Anspruch 5, dadurch gekennzeichnet, daß das Reduktionsmittel so injiziert wird, daß in Abhängigkeit von der Auslastung der Feuerungsanlage der $NO_x$-Gehalt der Abgase bei vorgegebenem Ruß- bzw. Staubgehalt minimiert wird.

Additiv

Führungsgröße
0/4 – 20 mA
Ölmenge / NOx Messung

Deionat
3 – 6 bar

Luftversorgung
3 – 6bar

Kühlwasser
( – 200 l/h  20°C —— 60°C )

Lanze lastabhängig
gesteuert.

Figur 1

**NO2 in mg/Nm\*\*3 bez. auf 3% O2**

Kessellast

Betrieb ohne
Reduktionsmittel

Betrieb mit
Reduktionsmittel

Figur 2

**Europäisches Patentamt**

# EUROPÄISCHER RECHERCHENBERICHT

Nummer der Anmeldung

## EP 90 10 7062

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | VGB - KONFERENZ KRAFTWERK UND UMWELT, 1989, Seiten 213-217; V. HOENIG et al.: "Schadstoffminderung bei Schwerölfeuerungen durch Additive: Russ, SO3, NOx" * Gesamter Artikel * | 1 | B 01 D 53/34 C 10 L 1/10 |
| A | EP-A-0 270 719 (TECHNIQUE FRANCAISE DE DETAR-TRAGE) * Ansprüche 1-5 * | 1 | |
| A | US-A-4 166 724 (M. KANAO) * Anspruch * | 1 | |
| A | DE-A-3 530 277 (H. HÖLTER) * Anspruch * | 1 | |
| D,A | WO-A-8 702 025 (FUEL TECH) * Ansprüche 1-18 * | 1 | |
| A | DE-C-3 722 523 (DEUTSCHE BABCOCK) * Ansprüche 1-5 * | 1-7 | |
| A | DE-A-2 803 876 (KURASHIKI BOSEKI K.K.) * Ansprüche 1-19 * | 1-7 | RECHERCHIERTE SACHGEBIETE (Int. Cl.5) B 01 D C 10 L |
| A | EP-A-0 263 183 (MITSUBISHI) * Anspruch * | 1-7 | |

Der vorliegende Recherchenbericht wurde für alle Patentansprüche erstellt

| Recherchenort | Abschlußdatum der Recherche | Prüfer |
|---|---|---|
| Den Haag | 18 Januar 91 | KANOLDT W.W. |